# EUROPÄISCHE PATENTSCHRIFT

(11) **EP 1 712 880 B1**
(45) Veröffentlichungstag und Bekanntmachung des Hinweises auf die Patenterteilung: **28.03.2012**
(21) Anmeldenummer: 05008177.7
(22) Anmeldetag: 18.10.2004
(51) Int. Cl.: G01D 4/00, G08C 17/02, H04Q 9/00, H04M 11/00

(54) **Vorrichtung zum Weiterleiten von Wärme- und/oder Wasserverbrauchsdaten**
Device for relaying heat or water consumption data
Dispositif de transmission de données de consommation en chaleur et eau.

(43) Veröffentlichungstag der Anmeldung: 18.10.2006
(62) Teilanmeldung aus: 04024773.6
(73) Patentinhaber: METRONA WÄRMEMESSER UNION GMBH, 81379 München (DE)
(72) Erfinder: Heckmann, Dieter, 81475 München (DE); Hemauer, Wolfgang, 81377 München (DE)
(74) Vertreter: Becker Kurig Straus

(56) Entgegenhaltungen:
- DE-U1- 29 717 504
- US-A- 5 892 758
- US-A- 6 014 089

## Beschreibung

Die vorliegende Erfindung betrifft eine Vorrichtung zum Weiterleiten von Verbrauchsdaten, die den Wärme- oder Wasserverbrauch betreffen.

Bei verbrauchsabhängigen Abrechnungen von beispielsweise Wärme- oder Wasserkosten in Wohnungen oder gewerblich genutzten Räumen ist es im Allgemeinen üblich, die Verbrauchswerte einmal jährlich abzulesen. Die abgelesenen Werte werden von Hand notiert, in einem mobilen Rechner gespeichert oder per Modem ausgelesen und an ein Dienstleistungsunternehmen weitergeleitet, das sich auf die Erstellung von Verbrauchskostenrechnungen spezialisiert hat. Zusätzlich erhält das Dienstleistungsunternehmen Angaben über das Gesamtgebäude sowie Informationen, die die einzelnen Nutzer des Gebäudes betreffen.

Die DE 201 18 685 U1 offenbart eine Anordnung zur Übertragung und/oder Erfassung von Verbrauchsdaten. Die Anordnung umfasst ein Sendemodul, welches die zuvor gemessenen Verbrauchsdaten über ein Datenfernübertragungsnetz an eine Empfangsanlage übermittelt.

Die DE 100 39 430 A1 schlägt einen Verbrauchszähler vor, der mit einem Bluetooth-Modul versehen ist, um eine drahtlose Fernabfrage des Zählers zu ermöglichen. Ferner wird ein Bluetooth-Pico-Netzwerk offenbart, das aus entsprechenden Modulen aufgebaut ist, und über ein Knoten die Verbrauchsdaten an ein mit dem Netzwerk verbundenes Datengerät übermittelt.

Auch aus der DE 29 717 504 U1 und der US 6 014 089 sind verschiedene Konzepte von drahtlosen Verbrauchsdatenerfassungseinrichtungen bekannt. Diese Einrichtungen arbeiten in der Regel auf den freigegebenen und somit lizenzfreien ISM-Frequenzbänder (433-434 MHz, 868-870 MHz und 2.45 GHz). Verbreitet ist ein System mit einer Vielzahl von Datensammlern, wobei deren Empfänger im Gebäude bzw. in der Liegenschaft installiert sind. Die Datensammler empfangen Daten, die von den jeweiligen Verbrauchsdatenerfassungsgeräten, z.B. auf ISM-Band stammen, und speichern diese, um eine gewünschte Weiterverarbeitung zu erreichen. Abhängig von der Sendeleistung der Verbrauchsdatenerfassungsgeräte ergibt sich die Anzahl der fest installierten Datensammler.

Da ein Gerät fehlerbedingt ausfallen kann, sollte eine vertretbare Redundanz bei der Anzahl der Datensammler mit eingeplant werden. Die in den Datensammlern gespeicherten Daten werden an das Dienstleistungsunternehmen üblicherweise durch Auslesen der Datensammler vor Ort, durch Transport über lokale Netzwerke (M-Bus), M-Bus Zentralrechner und Gateways in drahtgebundene öffentliche Netzwerke weitergeleitet.

Nachteil dieser Datensammler ist, dass sie zum Betrieb Energie aus dem Stromnetz der Liegenschaft benötigen, was unwirtschaftlich und unsicher im Falle von Stromausfall ist. Bei Stromausfall entstehen unverhältnismäßig hohe Kosten.

Aufgabe der vorliegenden Erfindung ist ein es, eine Vorrichtung bereitzustellen, welche den langfristigen Betrieb eines eingangs genannten Datensammlers sicherstellt.

Diese Aufgaben werden mit Hilfe einer Vorrichtung gemäß dem Anspruch 1 gelöst. Weitere Ausführungsformen der vorliegenden Erfindung sind in den abhängigen Unteransprüchen wiedergegeben.

Gemäß einem Aspekt der vorliegenden Erfindung wird eine Vorrichtung zum Weiterleiten von Wärme- und/oder Wasserverbrauchsdaten bereitgestellt. Die erfindungsgemäße Vorrichtung umfasst eine Verarbeitungseinrichtung zur Verwaltung der Wärme- bzw. Wasserverbrauchsdaten und zur Steuerung der Vorrichtung. Der bereitgestellte Speicher speichert die Wärmeverbrauchsdaten bzw. Wasserverbrauchsdaten. Zur Identifizierung stellt die Verarbeitungseinrichtung ein Identifizierungsmodul bereit, welches einen Identifikationscode enthält. Der Identifikationscode wird für jede entsprechende Vorrichtung eindeutig bereitgestellt. Weiter wird ein Sender bzw. Sendeempfänger bereitgestellt, der die Wärme-Verbrauchsdaten aus dem Speicher ausliest und weiterleitet. Für die Steuerung von zeitabhängigen Operationen des Senders wird die Verarbeitungseinrichtung mit einem Zeitsteuerungsmodul gekoppelt.

Ferner ist es denkbar, einen zweiten Speicher bereitzustellen, der den ersten Speicher komplett spiegelt, um so eine sichere Verwahrung der Wärme-Verbrauchsdaten sicherzustellen.

Die Vorrichtung umfasst ferner einen Empfänger, der Wärme-Verbrauchsdaten von einer Vielzahl von Heizkostenverteilern durch Funkkontakt empfängt, wobei der Empfänger mit dem Speicher und der Verarbeitungseinrichtung gekoppelt ist, wobei das Zeitsteuerungsmodul auch den Empfänger steuert. Der Empfänger erlaubt das Empfangen von Daten mehrerer Heizkostenverteiler, so dass die Kostenüberwachung in einer Liegenschaft mit verteilten Heizkostenverteilern unter mehreren Parteien ausgeführt werden kann. Die zeitliche Steuerung des Empfängers mit Hilfe des Zeitsteuerungsmoduls erlaubt einen Strom sparenden Betrieb des Empfängers. Der Empfänger leitet die empfangenen Daten an den Speicher weiter.

Erfindungsgemäß kann der Empfänger von der Verarbeitungseinrichtung jeweils in einem vorbestimmten Empfangszeitfenster gemäß einem Empfangsprotokoll zum Empfang des Wärme-Verbrauchswertes eingeschaltet werden. Dies erlaubt ein kontrolliertes Empfangen der Wärme-Verbrauchsdaten, so dass der Empfänger nicht kontinuierlich in Betrieb sein muss. Demzufolge wird ein energiesparender Betrieb erreicht.

Die Vorrichtung kann ferner ein Erfassungsmodul zum Erfassen der Wärme-Verbrauchsdaten umfassen. Das Erfassungsmodul ist mit dem Speicher und mit der Verarbeitungseinrichtung verbunden und außerdem in der Nähe einer Wärmequelle angeordnet. Durch diese vorteilhafte Ausführungsform, können die Wärme-Verbrauchsdaten direkt von der Wärmequelle erfasst werden.

Es ist bevorzugt, dass das Erfassungsmodul einen Temperatursensor aufweist. Der Temperatursensor liefert ein Maß für den Wärmeverbrauch der am Sensor befindlichen Wärmequelle. Dies erlaubt die direkte Erfassung der verbrauchten Energie und somit ferner eine vorteilhafte Ermittlung der entstandenen Kosten.

Gemäß einer weiteren Ausführungsform der Erfindung ist die Verarbeitungseinrichtung dementsprechend ausgelegt, so dass die Wärme-Verbrauchsdaten mit einem Datenkopf versehen werden. Der Datenkopf enthält den Identifizierungscode, die Uhrzeit und fakultativ weitere Information, die die Wärme-Verbrauchsdaten betreffen. Der Datenkopf dient zur genauen Identifizierung der Wärme-Verbrauchsdaten in einem Dienstleistungsunternehmen. Infolgedessen kann genau ermittelt werden, von wo die Daten stammen und ebenfalls können Uhrzeit und weitere Informationen abgelesen werden. Diese können beispielsweise statistischer Art sein.

Erfindungsgemäß kann der Sender von der Verarbeitungseinrichtung jeweils in einem vorbestimmten Sendezeitfenster gemäß einem Sendeprotokoll zum Senden des Wärme-Verbrauchswertes eingeschaltet werden. Dies ist vorteilhaft da der Sender nicht dauerhaft in Betrieb sein muss. Durch die Wahl des Sendezeitfensters in den Nachtstunden kann die Übertragung der Daten schneller verlaufen, da der Datenverkehr nachts entsprechend gering ist. Ferner kann das Sendeprotokoll zyklische Zeitpunkte zum Senden definieren, so dass eine monatliche Übertragung der Wärme-Verbrauchsdaten erreicht werden kann.

Erfindungsgemäß sind das Empfangsprotokoll und das Sendeprotokoll so angepasst, dass das Sendezeitfenster und das Empfangszeitfenster im Wesentlichen übereinstimmen und diese zeitliche Synchronisierung den Datentransfer ermöglicht.

Desweiteren kann das Erfassungsmodul von der Verarbeitungseinrichtung jeweils in einem vorbestimmten Erfassungszeitfenster gemäß einem Erfassungsprotokoll zum Erfassen des Wärme-Verbrauchswertes eingeschaltet werden. Dies erlaubt ebenfalls einen energiesparenden Betrieb der Vorrichtung, da das Erfassungsmodul nicht kontinuierlich betrieben werden muss.

Es wird bevorzugt, dass das Sendeprotokoll und das Erfassungsprotokoll so angepasst sind, dass das Sendezeitfenster und das Erfassungszeitfenster im Wesentlichen zeitlich hinsichtlich der Zeitdauer übereinstimmen. Dies erlaubt eine direkte Übertragung der erfassten Wärme-verbrauchsdaten gegebenenfalls ohne Speichernutzung. Diese Ausführungsform ist beispielsweise vorteilhaft, falls der Speicher der Vorrichtung übergelaufen ist und die Daten trotzdem nicht verloren gehen sollen.

Der Sender kann ein GSM-Modul umfassen, welches die Wärme-Verbrauchsdaten über ein GSM-Mobilfunknetzwerk weiterleitet. Dies ist vorteilhaft, da eine existierende Infrastruktur für die Übertragung der Wärme-Verbrauchsdaten verwendet werden kann.

Es wird bevorzugt, dass das GSM-Modul den Sender enthält, wobei die Verarbeitungseinrichtung bzw. das Zeitsteuermodul das GSM-Modul mittels eines Einwahlprotokolls steuert.

Somit kann beispielsweise eine uhrzeitabhängige Einwahl durchgeführt werden, die die Schwachlastzeiten des GSM-Mobilfunknetzwerkes ausnutzt.

Die Verarbeitungseinrichtung kann ein Komprimierungsmodul umfassen, das ausgelegt ist, um in dem Speicher gespeicherte Wärme-Verbrauchsdaten verlustfrei zu komprimieren und in komprimierter Form an den Sender weiterzuleiten. Somit wird die Sendebandbreite durch die Reduzierung der zu übertragenden Daten nicht so stark belastet. Infolgedessen besteht die Möglichkeit, dass mehrere Sender einen Sendekanal benutzen.

Es wird bevorzugt, dass das Komprimierungsmodul betriebssystemunabhängige und dateisystemunabhängige Daten erzeugt. Diese vorteilhafte Ausführungsform ermöglicht eine von der Plattform unabhängige Handhabung der Daten und somit uneingeschränkte Kompatibilität.

Beispielsweise umfasst der Sender ein UMTS-Modul, das die Wärme-Verbrauchsdaten über ein UMTS-Mobilfunknetzwerk weiterleitet. Durch die größere Kapazität des UMTS-Netzes können noch größere Datenmengen versendet werden und ebenfalls erweiterte Dienste bereitgestellt werden.

Beispielsweise umfasst der Sender ein TETRA-Modul, das die Wärme-Verbrauchsdaten über ein TETRA-Mobilfunknetzwerk weiterleitet. Durch die Vorteile des TETRA-Netzes können noch größere Datenmengen versendet werden und ebenfalls erweiterte Dienste bereitgestellt werden.

Beispielsweise umfasst der Sender ein Internet-Modul, das mit einem Web-Anschluss verbindbar ist, um die Wärme-Verbrauchsdaten direkt über das Internet weiterzuleiten. Durch das Internet-Modul und dessen Anbindung an das Web kann eine benutzerfreundliche und erweiterbare Schnittstelle realisiert werden. Durch den Einsatz von HTML oder XHTML kann somit die Verwaltung der Wärme-Verbrauchsdaten überall auf der Welt durchgeführt werden und als weiterer Vorteil ist es möglich, die bereits vorhandene Internet-Infrastruktur zu verwenden.

Es wird bevorzugt, dass das Identifizierungsmodul ein SIM-Modul umfasst. Das SIM-Modul (Subscriber Identity Module) erlaubt die genaue Identifizierung der Vorrichtung mittels einer darin integrierten Chipkarte. Ein weiterer Vorteil ist, dass die Chipkarte portabel ist und von einer Vorrichtung in die andere übertragen werden kann.

Es wird bevorzugt, dass die Verarbeitungseinrichtung so ausgelegt ist, dass sie einen Transfer der Wärme-Verbrauchsdaten mittels TCP/IP durchführt. Durch die Verwendung von TCP/IP wird ein weit verbreitetes Protokoll verwendet, um so eine standardisierte Erweiterung der Dienste zu ermöglichen. Es wird ebenfalls eine fehlerfreie Datenübertragung durch die Benutzung der Fehlerkorrektur des TCP/IP-Stacks ermöglicht.

Es wird bevorzugt, dass der Transfer der Wärme-Verbrauchsdaten mittels eines GPRS-Dienstes durchgeführt wird, der über das GSM Netzt erreicht werden kann. Dadurch wird eine paketbasierte Übertragung der Wärme-Verbrauchsdaten bereitgestellt, welche auf der bekannten und umfassend eingeführten GSM-Technologie basiert.

Beispielsweise ist die Verarbeitungseinrichtung so ausgelegt, dass sie die gespeicherten Wärme-Verbrauchsdaten mit dem Identifizierungscode ergänzt und anschließend in Form von elektronischen Emails über den Sender weiterleitet. Durch die Verwendung der so genannten Email-Funktion kann eine verbesserte Verwaltung der Daten erreicht werden, da vorhandene und leicht erweiterbare Infrastrukturen verwendet werden können.

Es wird bevorzugt dass eine mit der Verarbeitungseinrichtung verbundene Schnittstelle vorgesehen ist, welche angepasst sind, die gespeicherten Wärme-Verbrauchsdaten lokal an eine Ableseeinrichtung weiterzugeben. Dies kann beispielsweise über einen optischen Kanal erfolgen. Dadurch kann beim Ausfall des Senders trotzdem eine Ablesung der Wärme-Verbrauchsdaten durchgeführt werden.

Es wird bevorzugt, dass der Sender innerhalb des ISM-Bandes betrieben werden kann. Durch den Betrieb innerhalb dieser lizenzfreien Frequenz können kostengünstige Vorrichtungen realisiert werden. Auch eine Kompatibilität zwischen unterschiedlichen Herstellern, die dieses Band verwenden, kann ermöglicht werden.

Beispielsweise umfasst die Vorrichtung eine Schnittstelle für ein Schreib- und Lesegerät zum Schreiben oder Lesen einer Chipkarte, wobei die Schnittstelle mit der Verarbeitungseinrichtung verbunden ist. Durch den Einsatz einer solchen Schnittstelle können die Wärme-Verbrauchsdaten lokal auf eine Chipkarte gespeichert werden. Der Verbraucher kann diese beispielsweise per Post an das Dienstleistungsunternehmen senden und kein Ablesepersonal muss vor Ort anwesend sein.

Es wird bevorzugt, dass die Verarbeitungseinrichtung eine Selbstdiagnoseeinheit umfasst, um Fehlfunktionen zu identifizieren und zu melden. Falls die Vorrichtung Fehlfunktionen oder Ausfälle identifiziert, kann eine automatisch generierte Nachricht an das Dienstleistungsunternehmen versendet werden und ein Techniker kann gezielt zur Reparatur ausrücken.

Beispielsweise umfasst die Verarbeituhgseinrichtung eine Verschlüsselungseinheit, um eine Verschlüsselung der gespeicherten Wärme-Verbrauchsdaten durchzuführen. Durch die Verschlüsselung kann zum Beispiel der Missbrauch der Daten durch Dritten vermieden werden. Ergänzend können die Daten im Übertragungskanal verschlüsselt übertragen werden, um somit eine zusätzlichen Sicherheitsaspekt zu erreichen.

Es wird bevorzugt, dass das Einwahlprotokoll vorrichtungsspezifische Daten mit Hilfe des Senders weiterleitet. Somit kann der Mobilfunkbetreiber eine Abrechnung der Verbindung vornehmen.

Es wird bevorzugt, dass das Einwahlprotokoll einen Einwahlzeitpunkt in das GSM-Mobilfunknetzwerk definiert. Infolgedessen können die Einwahlzeitpunkte bevorzugt nachts gewählt werden, da zu dieser Zeit im Wesentlichen ein schwacher Datenverkehr innerhalb des Mobilfunknetzwerkes registriert wird.

Die vorstehend dargelegten und weiteren Merkmale der vorliegenden Erfindung werden in der nachstehenden detaillierten Beschreibung der Figuren in denen:
Fig. 1 eine schematische Darstellung einer ersten Ausführungsform der Vorrichtung zeigt, die einen Empfänger umfasst;
Fig. 2 ein Datenpaket darstellt, welches die Wärme-Verbrauchsdaten und weitere Information enthält;
Fig. 3 ein Blockdiagramm einer zweiten Ausführungsform der Vorrichtung zeigt, die eine Erfassungseinheit umfasst.

Die Erfindung wird im Folgenden im Zusammenhang mit den vorstehend beschriebenen Ausführungsformen konkretisiert. Es ist jedoch zu verstehen, dass die Erfindung nicht auf diese Ausführungsformen beschränkt sein soll.

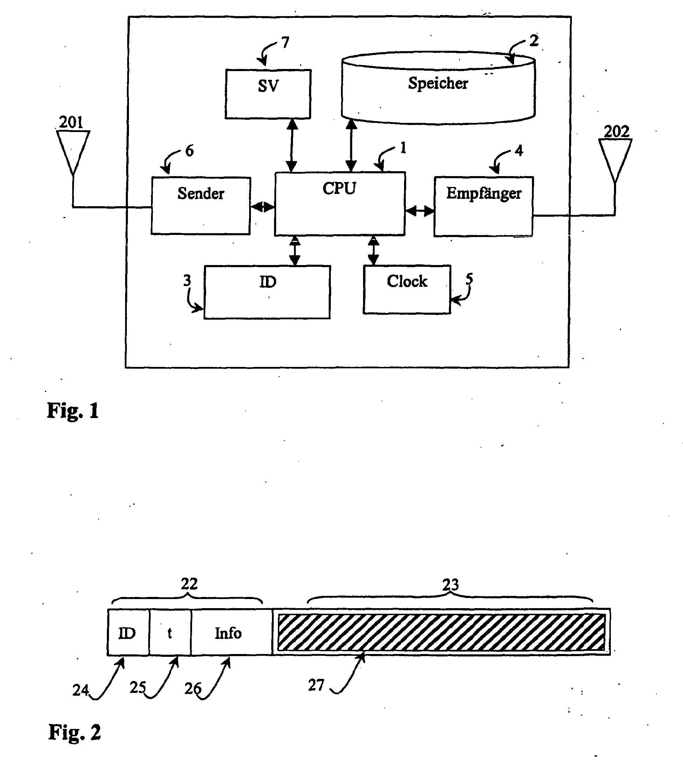

Fig. 1 repräsentiert ein Blockdiagramm einer ersten Ausführungsform der erfindungsgemäßen Vorrichtung, die als Datensammler in einem Netz verwendbar ist. Es wird dargestellt eine zentrale Verarbeitungseinrichtung 1 der Vorrichtung. Diese wird verwendet, um alle möglichen Operationen zu steuern. Innerhalb der Verarbeitungseinrichtung wird ein Softwareprogramm installiert und ausgeführt, welches alle in der Vorrichtung eingeschlossenen Einheiten steuert.

Die Verarbeitungseinrichtung 1 ist verbunden mit einem Speicher 2, in dem alle wichtigen Daten, wie Wärme-Verbrauchsdaten gespeichert werden. Intern verfügt die Verarbeitungseinrichtung über einen Zusatzspeicher, der zur Zwischenspeicherung oder andere betriebsinteme Operationen dient. Es ist bevorzugt, dass der Speicher 2 mit einem Erweiterungsspeicher ausgestattet wird, so dass eine Vergrößerung der Speicherkapazität erreicht werden kann. Der Speicher 2 wird als nichtflüchtiger Speicher realisiert, um zu vermeiden, dass bei Verlust der Spannungsversorgung wichtige Daten verloren gehen. Auch bevorzugt ist die Verwendung eines so genannten Backup-Speichers, der die Daten des Speichers 2 vollständig spiegelt und im Fehlerfall wiederherstellen kann. Alle Speicherzugriffe, Lese- oder Schreibeoperationen werden mit Hilfe der Verarbeitungseinrichtung 1 durchgeführt.

Um eine genaue Identifizierung der Vorrichtung zu ermöglichen, wird die Vorrichtung mit einem Identifizierungsmodul 3 erweitert, das ebenfalls mit der zentralen Verarbeitungseinrichtung 1 verbunden ist. Das Modul 3 stellt einen eindeutigen Identifizierungscode bereit, der es möglich macht, die Vorrichtung unter einer Vielzahl von Vorrichtungen zu identifizieren. Das Identifizierungsmodul 3 kann ein SIM-Modul beinhalten zum Betrieb in einer GSM-Infrastruktur. Das SIM-Modul umfasst eine Chipkarte, die jede Vorrichtung genau identifiziert. Diese Chipkarte ist portabel und kann von einem Gerät zum nächsten übertragen werden. Die Chipkarte erlaubt das Einwählen in ein lokal verfügbares Funknetzwerk und kann aber auch als Speichermedium dienen, um verschiedene Verbraucherinformationen zu speichern. Die vorhandene Infrastruktur des Netzbetreibers kann somit in Anspruch genommen werden.

Ferner wird ein Sender 6 der Vorrichtung dargestellt. Der Sender 6 ist verbunden mit der Verarbeitungseinrichtung 1 und kann somit indirekt auf den Speicher 2 zugreifen. Die gespeicherten Wärme-Verbrauchsdaten können hierdurch ausgelesen und per Funk weitergeleitet werden, z.B. an das Dienstleistungsunternehmen. Der Sender kann in einem GSM-Modul vorgesehen sein, um somit eine bidirektionale Kommunikation zwischen der Vorrichtung und einem bestimmten Einwahlknoten bzw. einer Basisstation zu ermöglichen. Das GSM-Modul erlaubt die Verwendung von verschiedenen Mobilfunkdienste wie GPRS oder falls gewünscht WAP. Da die Vorrichtung über ein SIM-Modul und ein GSM-Modul verfügt, kann ferner eine gezielte Anwahl der Vorrichtung durch ein Dienstleistungsunternehmen durchgeführt werden. Demgemäß kann das Dienstleistungsunternehmen gezielt auf die Vorrichtung zugreifen und, falls gewünscht, die Wärme-Verbräuchsdaten aus dem Speicher zu jedem beliebigen Zeitpunkt ablesen. Diese Schritte können softwaretechnisch automatisiert werden, so dass Kosten für Verwaltung bzw. Ablesepersonal eingespart werden können.

Ferner ist ein mit der Verarbeitungseinrichtung 1 verbundenes Zeitsteuerungsmodul 5 vorgesehen. Die Verarbeitungseinrichtung verwendet Informationen des Zeitsteuerungsmoduls 5, um beispielsweise getaktete Operationen durchzuführen oder um den Sender 6 zu steuern. Da der Sender nur für bestimmte Zeitfenster in Betrieb genommen werden muss, wird ein wirtschaftlich vorteilhafter Umgang mit Energie zur Speisung der Vorrichtung erreicht. Eine Antenne 201 ist vorgesehen, die von der Sendeeinheit 6 verwendet wird, um die gesamte Funkkommunikation durchzuführen. Analog wird eine zweite Antenne 202 durch den Empfänger 4 benutzt. Es ist bevorzugt, technisch beide Antennen 201 und 202 zusammenzufassen, um einen bidirektionalen Datenverkehr über eine gemeinsame Einheit zu realisieren. Der Empfänger empfängt mit Hilfe der Antenne 202 die Wärme-Verbrauchsdaten, die von einer Vielzahl von Heizkostenverteilern stammen und reicht diese an die Verarbeitungseinrichtung weiter. Die Verarbeitungseinrichtung 1 kann diese Daten weiter verarbeiten und gibt sie anschließend an das Speichermodul weiter, wo sie gespeichert werden. Auch der Empfänger 4 kann zeitgesteuert von der Verarbeitungseinrichtung ein bzw. ausgeschaltet werden. Vorteilhafterweise kann der Empfang der Daten zu bestimmten Zeitpunkten durchgeführt werden, wo ein schwacher Datenverkehr herrscht. Demgemäß wird Energie gespart, da der Empfang nur für relativ kurze Zeitabständen eingeschaltet werden muss. Die Einheit 7 stellt die Stromversorgung der Vorrichtung dar. Durch die erfindungsgemäße Steuerung der einzelnen Einheiten durch die zentrale Verarbeitungseinrichtung 1 kann eine mindestens 10-jährige Betriebsdauer erreicht werden. Die Stromversorgung wird durch handelsübliche Batterien oder Akkus realisiert, um einen wirtschaftlich vorteilhaften Aspekt zu gewährleisten.

Fig. 2 zeigt das Modell eines Datenpaketes dar, der Wärmeverbrauchsdaten enthält. Das Datenpaket weist zwei Abschnitte auf, nämlich einen Datenkopf 22 und einen Nutzdatenbereich 23. Der Datenkopf enthält in dieser nicht beschränkenden Ausführungsform drei Bereiche, nämlich einen Identifizierungsbereich 24, einen Zeitstempel 25 und ein Informationsfeld 26.

Der Nutzdatenbereich 23 oder das Nutzdatenfeld enthält die Wärme-Verbrauchsdaten, die von der Vorrichtung gespeichert werden. Sie werden im Speicher 2 abgelegt und können, falls gewünscht, weiterverarbeitet werden. Die Daten werden bevorzugt mit Hilfe einer Verschlüsselungseinheit verschlüsselt, so dass Unbefugte keinen Datenmissbrauch betreiben können. Die Länge der Daten kann variabel gestaltet werden, demzufolge wird eine uneingeschränkte Nutzung des Nutzdatenbereiches erreicht. Die Länge der Nutzdaten kann beispielsweise im Informationsfeld 26 mitgeteilt werden. Der Identifizierungsbereich 24 kann den Identifizierungscode enthalten, der zum Beispiel im SIM-Modul mit enthalten ist. Der Zeitstempel 25 erhält zeitliche Angaben wie Datum und Uhrzeit. Die Information aus dem Feld 25 kann beispielshalber für statistische Zwecke verwendet werden, auch ist eine zeitliche Sortierung und Zuordnung der Datenpakete möglich. Neben der Länge an Nutzdaten kann das Informationsfeld 26 ebenfalls liegenschaftsspezifische Informationen enthalten. Bevorzugt sind Daten wie Größe der beheizten Räume, Adresse der Liegenschaft oder zusätzliche Informationen betreffend das Dienstleistungsunternehmen. Außerdem muss jedes Datenpaket einer bestimmten Wärmequelle zugeordnet werden. Dies kann durch zusätzliche Angaben im Informationsfeld oder aber durch die Identifizierung mit Hilfe des Identifikationscodes aus Feld 24 geschehen.

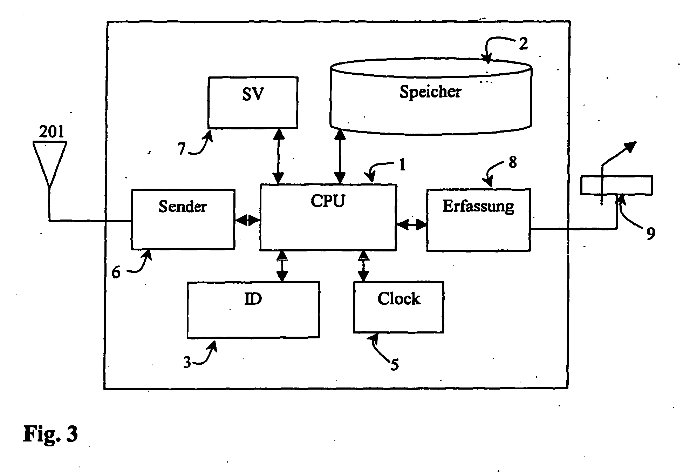

Fig. 3 schlägt eine Vorrichtung vor, welche als Heizkostenverteiler in einem Netz verwendbar ist. Diese Vorrichtung ist teilweise analog zu der Ausführungsform, welche anhand von Fig. 1 beschrieben wurde. Anstelle eines Empfängers 4 (Fig. 1) wird ein Erfassungsmodul 8 eingesetzt und die Antenne 202 wird durch einen Temperatursensor 9 ersetzt. Die so veränderte Vorrichtung kann konkret als Wärme-Verbrauchszähler (Heizkostenverteiler) eingesetzt werden. Der Sensor 9 erfasst den Wärmeverbrauch und sein Ausgangssignal kann direkt zur Ermittlung der Wärmekosten benutzt werden. Die anhand von Fig. 1 beschriebe Funktionalität der Vorrichtung kann weiterhin bestehen bleiben. Infolgedessen kann jede Heizung (Wärmequelle) in einer Liegenschaft mit einer erfindungsgemäßen Vorrichtung bestückt werden, um somit eine gezielte Femablesung bzw. Fernübertragung der Wärme-Verbrauchsdaten zu ermöglichen. Im übrigen gelten alle in Verbindung mit Fig. 1 beschriebenen Merkmale auch sinngemäß für die in Fig. 3 beschriebene Ausführungsform.

Mit Hilfe der Verarbeitungseinrichtung kann eine periodische Übertragung der Wärme-Verbrauchsdaten realisiert werden. Falls ein Fehler in der Vorrichtung mit Hilfe der darin enthaltenen Selbstdiagnoseeinheit festgestellt wurde, kann das Dienstleistungsunternehmen automatisch benachrichtigt werden.

Ferner können Wärme-Verbrauchsdaten kontinuierlich ausgelesen werden, um den genauen Betrieb der Wärmequelle zu überwachen. Es ist auch bevorzugt, die erfindungsgemäße Vorrichtung mit einem Ventil, der die Wärmeabgabe an die Wärmequelle steuert, zu verbinden, um so zusätzlich eine Fernsteuerung der Raumtemperatur zu erreichen.

Bevorzugt sind alle Einrichtungen bzw. Komponenten der Vorrichtung in einem Gehäuse untergebracht bzw. darin integriert. Dies schafft einen kompakten und Raum sparenden Aufbau.

Der mit einem Weitverkehrsnetzmodul (z.B. GSM oder UMTS) verbundene Sendeempfänger kann bevorzugt in einem sogenannten "Horchmodus" betrieben werden. Dabei ist der Sendeempfänger auf Empfang eines Steuersignals eingerichtet, das geeignet ist, die Übertragung der Verbrauchsdaten zu steuern. In einer ersten Ausführung wird bei Empfang des Steuersignals unmittelbar die Aussendung gespeicherter Verbrauchsdaten über den Sendeempfänger ausgelöst. In einer zweiten Ausführung enthält das Steuersignal einen Instruktionsabschnitt, der eine Zeitangabe bzw. ein Zeitprotokoll für die Aussendung der Verbrauchsdaten aufweist. Dadurch läßt sich die Vorrichtung von außen steuern.

Bevorzugt ist ein Programmspeicher vorgesehen, der Programmcodes zur Steuerung der Verarbeitungseinrichtung oder/oder des Zeitsteuermoduls und/oder des Weitverkehrsnetzmoduls (GSM oder dergleichen) enthält. Das Weitverkehrsnetzmodul (GSM, UMTS oder dergleichen) enthält eine Schnittstelle, die mit dem Programmspeicher verbunden ist, um über den Sendeempfänger Programmcodes zu empfangen, die im Programmspeicher abgelegt werden, um sodann die Vorrichtung zu steuern. Dies entspricht einem Software-Download.

Ebenfalls kann das Sendeprotokoll bzw. Empfangsprotoll bzw. Einwahlprotokoll über die Schnittstelle aktualisiert werden. Dazu wird ein aktualisiertes Protokoll heruntergeladen und gespeichert. Alternativ kann der Sendeempänger ein aktuelles Protokoll aufgrund einer in der Programmsteuerung enthaltenen Instruktion zu einem vorbestimmten Zeitpunkt anfordern, empfangen und in den Speicher laden.

Alternativ zu der oben genannten Stromversorgung durch Batterien oder Akkus kann im besonderen Anwendungsfall die Vorrichtung durch einen Anschluß an das öffentliche Stromnetz versorgt werden. Bevorzugt ist dann ein Transformator und Gleichrichter in der Vorrichtung vorgesehen, um eine Gleichspannung bereitzustellen.

Die Verarbeitungseinrichtung umfasst bevorzugt ein Komprimierungsmodul, das ausgelegt ist, um in dem Speicher gespeicherte Wärme-Verbrauchsdaten verlustfrei zu komprimieren und in komprimierter Form an den Sender weiterzuleiten.

Das Komprimierungsmodul erzeugt bevorzugt betriebssystemunabhängige und dateisystemunabhängige Daten.

Der Sender enthält bevorzugt ein UMTS-Modul, das die Wärme-Verbrauchsdaten über ein UMTS-Mobilfunknetzwerk weiterleitet.

Der Sender umfasst bevorzugt ein TETRA-Modul, das die Wärme-Verbrauchsdaten über ein TETRA-Mobilfunknetzwerk weiterleitet.

Der Sender umfasst bevorzugt ein Internet-Modul, das mit einem Web-Anschluss verbindbar ist, um die Wärme-Verbrauchsdaten über das Internet weiterzuleiten.

Eine Stromversorgung 7 ist vorgesehen, die mit der Verarbeitungseinrichtung verbunden ist, wobei die Stromversorgung Batterien bzw. Akkus aufweist.

Das Identifizierungsmodul umfasst bevorzugt ein SIM-Modul.

Die Verarbeitungseinrichtung ist bevorzugt ausgelegt, einen Transfer der Wärme-Verbrauchsdaten mittels TCP/IP durchzuführen.

Der Transfer der Wärme-Verbrauchsdaten wird bevorzugt mittels eines GPRS-Dienstes **durchgeführt.**

Die Verarbeitungseinrichtung ist bevorzugt ausgelegt, die gespeicherten Wärme-Verbrauchsdaten mit dem Identifizierungscode zu ergänzen und anschließend in Form von elektronischer Post über den Sender weiterzuleiten.

Es ist bevorzugt eine mit der Verarbeitungseinrichtung verbundene Schnittstelle vorgesehen, welche angepasst ist, die gespeicherten Wärme-Verbrauchsdaten lokal an eine Ableseeinrichtung weiterzugeben.

Der Sender kann bevorzugt innerhalb des ISM-Bandes betrieben werden.

Es ist bevorzugt eine Schnittstelle für ein Schreib- und Lesegerät zum Beschreiben oder Lesen einer Chipkarte vorgesehen, wobei die Schnittstelle mit der Verarbeitungseinrichtung verbunden ist.

Die Vorrichtung umfasst bevorzugt eine Befestigungsvorrichtung, um an einer Wärmequelle befestigt zu werden.

Die Verarbeitungseinrichtung umfasst bevorzugt eine Selbstdiagnoseeinheit, um Fehlfunktionen zu identifizieren und zu melden.

Die Verarbeitungseinrichtung umfasst bevorzugt eine Verschlüsselungseinheit, um eine Verschlüsselung der gespeicherten Wärme-Verbrauchsdaten durchzuführen.

Das Einwahlprotokoll leitet bevorzugt vorrichtungsspezifische Daten mit Hilfe des Senders weiter.

Das Einwahlprotokoll definiert bevorzugt einen Einwahlzeitpunkt in das GSM-Mobilfunknetzwerk.

## Patentansprüche

1. Vorrichtung zum Weiterleiten von Wärme-Verbrauchsdaten, umfassend:
- eine Verarbeitungseinrichtung (1) zur Verwaltung der Wärme-Verbrauchsdaten und zur Steuerung der Vorrichtung;
- einen Speicher (2) zum Speichern der Wärme-Verbrauchsdaten;
- ein Identifizierungsmodul (3), das einen Identifikationscode für die Identifizierung der Vorrichtung bereitstellt;
- einen Sender (6), der die Wärme-Verbrauchsdaten aus dem Speicher ausliest und weiterleitet;
- ein Zeitsteuerungsmodul (5), das mit der Verarbeitungseinrichtung gekoppelt ist, zum Steuern des Senders;
- einen Empfänger (4), der Wärme-Verbrauchsdaten von einer Vielzahl von Heizkostenverteilern durch Funkkontakt empfängt, wobei der Empfänger mit dem Speicher (2) und der Verarbeitungseinrichtung (1) gekoppelt ist, wobei das Zeitsteuerungsmodul auch den Empfänger steuert;
wobei
- der Sender ein Weitverkehrsnetzmodul umfasst, welches die Wärme-Verbrauchsdaten über ein Weitverkehrsnetzwerk weiterleitet,
wobei
- das Weitverkehrsnetzmodul einen Sendeempfänger und das Identifizierungsmodul (3) enthält, wobei die Verarbeitungseinrichtung (1) bzw. das Zeitsteuermodul (5) das Weitverkehrsnetzmodul mittels eines Einwahlprotokolls steuert
- und wobei der Sender von der Verarbeitungseinrichtung jeweils in einem vorbestimmten Sendezeitfenster gemäß einem Sendeprotokoll zum Senden des Wärme-Verbrauchswertes einschaltbar ist,
**dadurch gekennzeichnet, dass**
der Empfänger von der Verarbeitungseinrichtung jeweils in einem vorbestimmten Empfangszeitfenster gemäß einem Empfangsprotokoll zum Empfang des Wärme-Verbrauchswertes einschaltbar ist; und
das Empfangsprotokoll und das Sendeprotokoll so angepasst sind, dass das Sendezeitfenster und das Empfangszeitfenster im Wesentlichen zeitlich hinsichtlich des Zeitpunktes übereinstimmen.

2. Vorrichtung nach einem der vorhergehenden Ansprüche, wobei die Verarbeitungseinrichtung ausgelegt ist, die Wärme-Verbrauchsdaten mit einem Datenkopf zu versehen, der den Identifizierungscode, Uhrzeit und weitere Information enthält, die die Wärme-Verbrauchsdaten betreffen.

## Claims

1. A device for transferring heat consumption data, comprising:
- a processing device (1) for managing the heat consumption data and for controlling the device;
- a storage (2) for storing the heat consumption data;
- an identification module (3) that provides an identification code for identifying the device;
- a transmitter (6) that reads out the heat consumption data from the storage and transfers said data;
- a time control module (5) that is coupled to the processing device and serves for controlling the transmitter;
- a receiver (4) that receives, via radio contact, heat consumption data from a multiplicity of heat cost allocators, wherein the receiver is coupled to the storage (2) and the processing device (1), wherein the time control module also controls the receiver;
wherein
- the transmitter comprises a wide area network module which transfers the heat consumption data via a wide area network,
wherein
- the wide area network module includes a transceiver and the identification module (3), wherein the processing device (1) or, respectively, the time control module (5) controls the wide area network module by means of a dial-up protocol
- and wherein, the transmitter is switchable by the processing device in a predetermined transmission time window according to a transmission protocol for transmitting the heat consumption value,
**characterized in that**
the receiver is switchable by the processing device in each case in a predetermined reception time window according to a reception protocol for receiving the heat consumption value, and
the reception protocol and the transmission protocol are adapted in such a manner that the transmission time window and the reception time window are substantially synchronous with regard to the time.

2. The device according to any one of the preceding claims, wherein the processing device is designed for providing the heat consumption data with a data header that includes the identification code, time of day and further information related to the heat consumption data.

## Revendications

1. Dispositif pour transmettre des données de consommation de chaleur, comprenant :
- un dispositif de traitement (1) pour la gestion des données de consommation de chaleur et pour la commande du dispositif ;
- une mémoire (2) pour le stockage des données de consommation de chaleur ;
- un module d'identification (3), qui émet à disposition un code d'identification pour l'identification du dispositif ;
- un émetteur (6), qui extrait les données de consommation de chaleur de la mémoire et les transmet ;
- un module de commande de temps (5), qui est couplé avec le dispositif de traitement, pour la commande de l'émetteur ;
- un récepteur (4), qui reçoit des données de consommation de chaleur d'une pluralité de répartiteurs de frais de chauffage par contact radio, le récepteur étant couplé à la mémoire (2) et au dispositif de traitement (1), le module de commande de temps activant également le récepteur ;
- l'émetteur comprenant un module de réseau à longue distance, lequel transmet les données de consommation de chaleur par un réseau à longue distance,
- le module de réseau à longue distance contenant un récepteur d'émission et le module d'identification (3), le sens de traitement (1) ou le module de commande de temps (5) commandant le module de réseau à longue distance au moyen d'un protocole de sélection à l'entrée
- et l'émetteur pouvant être commuté par le dispositif de traitement à chaque fois dans une fenêtre temporelle d'émission prédéfinie selon un protocole d'émission pour l'émission de la valeur de consommation de chaleur,
**caractérisé en ce que**
l'émetteur peut être mis en circuit par le dispositif de traitement à chaque fois dans une fenêtre temporelle de réception prédéfinie selon un protocole de réception pour la réception de la valeur de consommation de chaleur ; et
le protocole d'émission et le protocole de réception sont adaptés, de telle sorte que la fenêtre temporelle d'émission et la fenêtre temporelle de réception coïncident sensiblement dans le temps en ce qui concerne le moment.

2. Dispositif selon l'une des revendications précédentes, le dispositif de traitement étant conçu pour doter les données de consommation de chaleur d'un en-tête de données, qui contient le code d'identification, l'heure et d'autres informations concernant les données de consommation de chaleur.
